# EUROPEAN PATENT SPECIFICATION

(11) **EP 3 623 296 B1**
(45) Date of publication and mention of the grant of the patent: **19.05.2021**
(21) Application number: 18382662.7
(22) Date of filing: 14.09.2018
(51) Int. Cl.: B64D 41/00, B64D 13/06

(54) **AIRCRAFT HAVING A POWER UNIT FOR GENERATIG ELECTRIC, PNEUMATIC AND/OR HYDRAULIC POWER**
FLUGZEUG MIT EINER LEISTUNGSEINHEIT ZUM ERZEUGEN VON ELEKTRISCHER, PNEUMATISCHER UND/ODER HYDRAULISCHER LEISTUNG
AÉRONEF COMPORTANT UNE UNITÉ DE PUISSANCE POUR GÉNÉRER UNE PUISSANCE ÉLECTRIQUE, PNEUMATIQUE ET/OU HYDRAULIQUE

(43) Date of publication of application: 18.03.2020
(73) Proprietor: Airbus Operations, S.L., 28906 Getafe (ES)
(72) Inventor: CASADO MONTERO, Carlos, 28906 Getafe (ES); MOLINA PARGA, Alberto, 28905 Getafe (ES)

(56) References cited:
- EP-A1- 3 029 281
- EP-A1- 3 112 271
- US-A1- 2015 047 684

## Description

### Object of the invention

The invention refers to an aircraft incorporating an enhanced power unit configured for generating electric, pneumatic and/or hydraulic power for the aircraft, during all stages of the aircraft operation.

An object of the invention is to provide an enhanced power unit for an aircraft capable of recovering thermal energy as mechanical energy, in order to downsize equipments and thus reduce the aircraft fuel consumption via a most efficient operating cycle.

### Background of the invention

It is known that several systems of commercial aircrafts require the extraction of air (bleed air) from one of the compression stages of the main engines. For example, the air conditioning system for the aircraft cabin requires bleed air in the form of hot compressed air that is taken from a compressor stage of the main engines of the aircraft.

Commonly, the air conditioning system supplies conditioned air with a desired temperature and pressure to a pressurized cabin, at the same time that controls the quality of the air cabin in terms of humidity and pressure. This way, the system ensures the human in-door accommodation in the cabin. Excess cabin pressurized air is expelled out of the cabin and wasted in its majority amount.

An environmental control system (ECS) of an aircraft, is the main equipment of the air conditioning system for the aircraft cabin, and it is generally formed by a turbine driven by bleed air taken from a main engine, such as the turbine power is transmitted to a compressor connected to a common shaft. The engine bleed air to be supplied to the turbine, is compressed by the compressor and then supplied to a pressurized cabin.

Such conventional air-conditioning systems operate at high pressure and temperature levels, for example the extracted bleed air temperature is typically at 200°C.

These air-conditioning systems usually require "Ram air" as a heat sink, so that the bleed air used for the air-conditioning is cooled by means of this ram air, as well as compression, intermediate cooling and expansion of the bleed air. However, Ram doors when deployed, normally implies an increase of drag that can vary depending on the flow amount need of cooling air.

As seen, the extraction of bleed air from the compression stages of the main engines, consumes a certain percentage of block fuel in a normal cycle or flight. For that, it is desirable to avoid or reduce the amount of air extracted from the main engines to thus reduce the aircraft fuel consumption.

Alternatively, bleed air can be provided by a compressor driven by a gas turbine of an Auxiliary Power Unit (APU).

An APU comprises a gas turbine, a pneumatic compressor, one or more electrical generators, and/or hydraulic pumps in order to provide electric, and/or pneumatic and/or hydraulic power. The main use of an APU is when the aircraft is on ground and the main engines are stopped, thus they cannot provide to the aircraft with electric, pneumatic or hydraulic external power necessary. During flight, the APU normally is not used, and the hydraulic and electric supplies as well as the bleed air, are provided by the main engines.

Therefore, there is still room for improving the extended use of a power unit of an aircraft in order to use it along the whole flight cycle, and also for improving the efficiency of its thermal systems to thus reduce the aircraft fuel consumption. EP 3 029 281 A1 discloses an aircraft comprising a fuselage, a wing attached to the fuselage, a jet engine for propelling the aircraft, which is attached to the wing or to the fuselage, and a heat recovery arrangement.

### Summary of the invention

The present invention refers to an aircraft incorporating an enhanced power unit capable of generating electric, pneumatic and/or hydraulic power for the aircraft. The power unit comprises any type of heat engine, preferably a gas-turbine or a reciprocating engine, having at least one drive shaft and an exhaust for evacuating combustion gases out of the heat engine.

The power unit further comprises at least one load compressor, and a Ram-air intake to supply Ram air to the load compressor. The load compressor is mechanically coupled with the drive shaft to provide a flow of compressed air to the aircraft.

In addition, the power unit incorporates a Rankine cycle system for recovering thermal energy from a pair of heat sources, and convert the recovered energy as mechanical energy that is applied to the drive shaft for the assistance of the heat engine, so that, the heat engine can be downsized, and as consequence the weight and fuel consumption of the aircraft, are reduced. Downsizing the heat engine greatly compensates the increase of weight due to the incorporation of the Rankine cycle components, well as the reduced volume of the heat engine allows its installation in an existing compartment of the aircraft, for example at the tail cone.

The heat sources for the Rankine cycle system are taken from the exhaust gases of the heat engine and from the output of a compressor driven from the heat engine.

According to the invention, the Rankine cycle system comprises an expander mechanically coupled with the drive shaft, a first Ram-air intake and a condenser thermally coupled with the Ram-air intake to cool down a Rankine system fluid, and a first and second heat exchangers used as heat sources. The first heat exchanger is thermally coupled with the output of the load compressor, and the second heat exchanger is thermally coupled with the exhaust. Both heat exchangers are intended to transfer heat to the Rankine system fluid.

Preferably, the aircraft cabin is communicated with the heat engine for feeding cabin air to the heat engine, so that excess cabin air is reused as a source of oxygen for the combustion at the heat engine.

The cabin air feed to the heat engine achieves the Main Engine cycle efficiency around 45%. At the same time, it increases the power offtake in altitude allowing to downsize the APU around 40%. Additionally, it makes the power offtake non-sensitive of the altitude and ambient conditions, i.e. no icing issues, and it does not create additional drag.

Preferably, the power unit further comprises at least one electric generator driven by the drive shaft for generating electric power, and at least one battery connected with the electric generator for storing the generated electric power.

Preferably, the output of the at least one load compressor is fluidly communicated with an environmental control system (ECS) of the aircraft.

According to another preferred embodiment, the output of the load compressor can also be fluidly communicated with the aircraft main engines to supply pressurized air for starting the main engines.

For generating hydraulic power for the aircraft, a hydraulic pump can additionally be coupled with the drive shaft.

Unlike prior art APU's that only operate when the aircraft is on the ground or in emergency situations in flight being able to deliver partial power supply, either pneumatic or electrical or both, the power unit of the invention is adapted to operate in all stages of an aircraft operation, namely: parked, taxing, climbing, cruising, descending and landing.

The power unit of the invention provides a significant part of the aircraft power demands either electrical or pneumatic or hydraulic, at least during normal operation, so that the amount of bleed air or electrical power extracted from the main engines is significantly reduced or even avoided, achieving thereby a significant block fuel saving.

### Brief description of the drawings

Preferred embodiments of the invention, are henceforth described with reference to the accompanying drawings, wherein:
Figure 1 shows a schematic representation of a preferred embodiment of the power unit according to the invention.
Figure 2 shows a top plan view of an aircraft showing a preferred location of the power unit, and its connection with the bleed air installation of an aircraft.

### Preferred embodiment of the invention

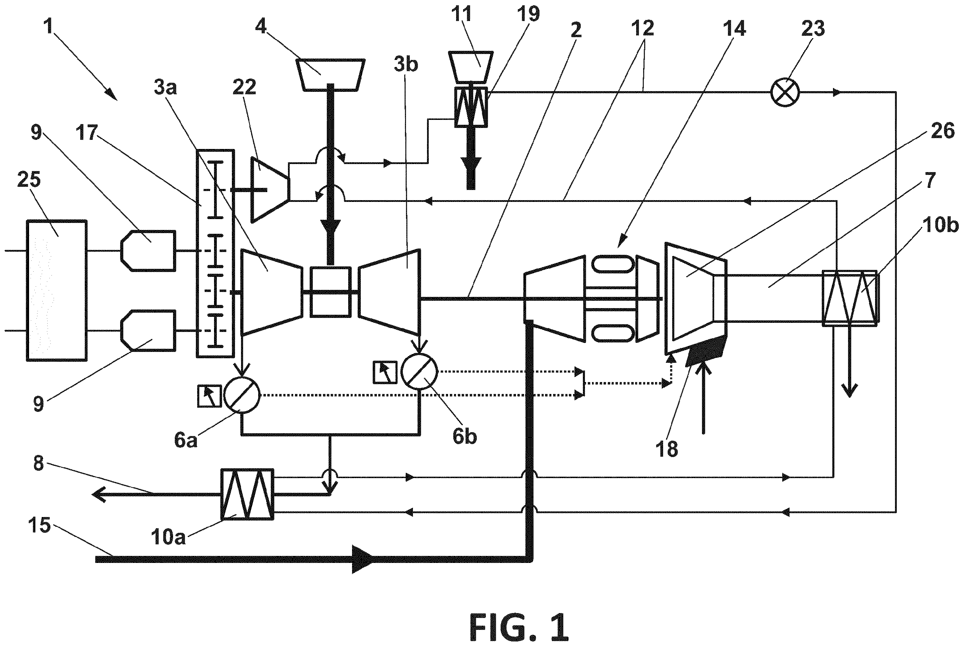

Figure 1 shows a preferred embodiment of a power unit (1) according to the invention comprising a heat engine, in this example a gas-turbine engine (14) coupled with a drive shaft (2) and a twin-load compressor (3) including first and second load compressors (3a, 3b) both mechanically coupled with the drive shaft (2) to provide respectively two flows of compressed air. Preferably, the gas-turbine engine (14) has only one drive shaft (2), but an engine with two drive shafts could also be used.

Preferably, the first and second load compressors (3a, 3b) are provided with air lubricated bearings, in order to prevent any oil contamination in the cabin.

In order to achieve a higher block fuel reduction, one of the load compressors (3a, 3b) is sized for ground operation. Usually the corrected flow needed for ground operation represents half of the total corrected flow in flight, based on that fact the preferred solution is to choose a twin load compressor configuration, face to face arranged and fed by a single air inlet, it means that two identical compressors are preferred. In case of that the ground to flight ratio differs, two different compressor sizing would be chosen.

A Ram-air intake (4) is in fluid communication with the twin-load compressor (3) to feed Ram air to the first and second load compressors (3a, 3b), in particular the Ram-air intake (4) is connected with a plenum (5) which reduces speed and distribute Ram air to both compressors (3a, 3b).

Flow regulating means (6) are coupled with the first and second load compressors outputs to individually regulate the two flows of generated compressed air. More specifically, these flow regulating means (6) comprises a first three-ways valve (6a) having one input connected with first compressor output (3a), and a second three-ways valve (6b) having one input connected with the second compressor output (3b).

These three-ways valves (6a, 6b) can be used to avoid reverse flow, so that when both compressors are working they provide the same pressure so that none of them go on surge. When only one of the compressors is working to provide air flow to the aircraft, the non-operative compressor is isolated by closing its associated three-ways valve, and when the two compressors are stopped, they are isolated by closing the three-ways valves.

The flow regulating means (6) also comprises inlet guide vanes (IGV's) (not shown) for each compressor, to regulate individually air flow through the compressors.

Alternatively or in combination with the IGV's, the output of compressed air can be regulated by varying the rotation speed of the heat engine.

One output of the first and second three-ways valves (6a, 6b) are connected with the exhaust pipe (7) to evacuate excess of air to the exterior, and another output of the second three-ways valves (6a, 6b) are connected to a general output (8) which is communicated with an environmental control system (ECS) (not shown) of the aircraft.

The power unit (1) additionally comprises at least one electric generator (9) operatively coupled with the drive shaft (2) through a gear box (17), to provide electric power to the aircraft, which can be stored in a battery which in turn is connected to an electric system of the aircraft.

The power unit (1) further comprises a Rankine cycle system (12) for recovering thermal energy as mechanical energy to be added to the mechanical power generated by the gas-turbine engine (14). The Rankine cycle system (12) comprises a closed circuit through which a working fluid can flow, an expander (22) mechanically coupled with the drive shaft (2) through the gear box (17), a Ram-air intake (11) and a condenser (19) thermally coupled with the Ram-air intake (11) to cool down the working fluid, and a first (10a) and second heat exchanger (10b) to transfer heat to the Rankine system fluid. The first heat exchanger (10a) is thermally coupled with the output of the load compressor (3), and the second heat exchanger (10b) is thermally coupled with the exhaust pipe (7).

As particularly shown in figure 1, the first heat exchanger (10a) is coupled with the output (8) of the flow regulating means (6), and the second heat exchanger (10b) is coupled with the exhaust pipe (7) of the gas-turbine (14).

With the first heat exchanger (10a), the heat of the air at the output (8) of the flow regulating means (6) is transferred to the working fluid of the Rankine circuit, so that that flow of air is cooled down before being fed to the aircraft ECS's. The working fluid is further heated by the second heat exchanger (10b), which installed at the gas-turbine exhaust pipe (7) recovers the thermal energy from combustion gases expelled from the gas-turbine (14). This way, with the first heat exchanger (10a) a temperature decrease in the bleed air is achieved, and the ECS takes better use of this air to later accommodate the air to cabin conditions in terms of less effort (energy management) and less complexity in the system, whereas the second heat exchanger (10b) transfers most of the heat (energy) to the working fluid that finally evaporates the cooling fluid and part of that energy is recovered by the expander (22).

After passing through the second heat exchanger (10b), the working fluid at high pressure and temperature is expanded at the expander (22) generating thereby a mechanical power which is applied to the drive shaft (2) of the gas-turbine (14), so that a gas-turbine (14) of reduced dimension can be used.

After the expander (22), the working fluid is cooled down at the condenser (19), by exchanging heat with the cold Ram air received from the Ram-air intake (11). From the condenser (19), the working fluid flows back towards the first heat exchanger (10a). The air flow used for the condenser (19) should be extracted out through the exhaust pipe (7).

A pump (23) is installed at the circuit to increase pressure of the working fluid flowing through the circuit. The pump (23) can be electrically or mechanically operated.

As further shown in figure 1, the aircraft cabin is communicated with the gas-turbine (14) by means of a conduit (15) so that, instead of using Ram air, excess cabin air is reused for the gas-turbine combustion.

Additionally, as shown in figure 1, a battery (25) can be provided for storing electric energy generated by the electric generators (9).

By incorporating the battery (25) to the power unit (1), the nominal values and dimensions of the heat engine, the electric generators and the associate equipments, can be reduced when designing the power unit, because the heat engine, the electric generators and the associate equipments, no need to be dimensioned for the expected highest power demand but for a mean value. The use of batteries (25) reduce the peak demands of the system, and the batteries can be recharged during valleys power demands.

Additionally, a flow device (18) such as an eductor or a fan together with an ACoC (Air Cooled Oil Cooler) can be placed at the exhaust pipe (7) or at the exhaust of the engine (26). This flow device (18) reduces the temperature of the exhaust gases, achieving a reduction in noise.

Due to the heat recovery Cycle (Rankine cycle), the following advantages are obtained:
- the temperature of the bleed air is decreased, so that only the primary heat exchanger is used and achieve the mixer temperature in the ECS pack (conventional and non-conventional, such as an electrically driven one) and bypass the turbomachine in order to reduce high pressure supply and need for cooling down the cabin air.
- the maximum power from the bleed air is obtained in order to downsize the turbo machine. Optimum has to be found in order to balance the heat recovery and the pressure drop that induces more heat during the pressurization.
- the bleed air temperature is lowered in order to replace or remove the detection system. Target is to reduce it below 120-150ºC (TBC).

It is to note that the bleed ducting already reduces the temperature along the piping that permit to get the minimum temperature at the pack interface.

Other requirements of the invention are:
The system should be such a way that permits its installation within the fire compartment and the tailcone.

The working fluid use as refrigerant should be nonflammable or the system should be designed to satisfy the fire-proof requirements of the fire designated area.

The recuperative turbine must be in such a way that should be a LRU (Line replacement Unit) as well as the other components of the recuperative cycle.

Going back to the embodiment of figure 1, a control system (not shown) is provided for controlling the operation of the first and second load compressors (3a, 3b), the first and second three-ways valves, in such a way to feed a flow of compressed air provided by the twin-compressor, as bleed air to an environmental control system (ECS) of an aircraft during an entire operation cycle.

The control system is adapted (programmed) to operate in three different modes:

### Mode 1 - aircraft is parked on ground.

For this mode, the control system is adapted such as one load compressor is supplying air to the ECS and the other load compressor is not supplying air, and preferably at least one electric generator is working, such as the majority of the bleed air and electric power required by the aircraft, is provided by the power unit. One three-ways valve is open and the other one is closed. This mode is similar to the conventional use of an APU.

### Mode 2 - aircraft taxing, climbing or descending below 25.000 ft.

For this mode, the control system is adapted such both first and second load compressors are running, as to provide bleed air at high pressure (around 30- 40 psig) so that the condensers can be used. The electric generators could be stopped. Both three-ways valves are open at the same position (but controlled independently). The wings anti-ice system could be powered or supplied either by the power unit or the main engines, and the ECS is running by the power unit.

### Mode 3 - aircraft in cruise, climbing or descending above 25.000 ft.

For this mode, the control system is adapted such as first and second compressors are running as to provide bleed air at low pressure (around 20 psig @ ceiling), slightly above the cabin need. The heat exchanger is used to cool down the air according to the mixer needs. Both the ECS's and the electric generators are stopped

Part of the compressed air goes through the heat exchanger and later on bypassed through by pass valve.

The control system may be implemented in many different ways known to a skilled person in the art. Conventionally the control system would comprise one or more programmable electronic devices, multiple sensors and actuators etc. The adaptation of the control system, basically consist in suitable software stored and executed by the programmable electronic devices.

It has been determined that the invention is capable of reducing till 50% the energy supply, depending on the flight phase, in some cases even more to provide suitable temperature and pressure to an aircraft cabin.

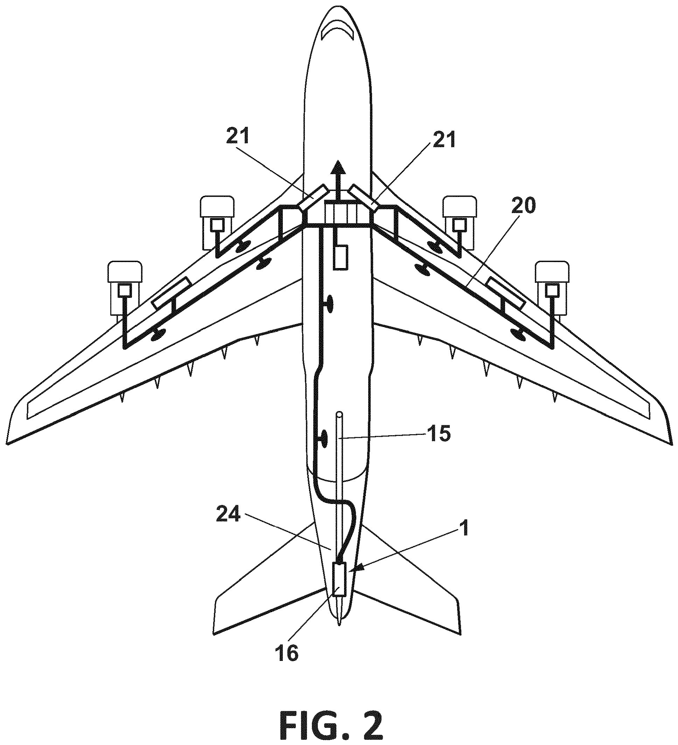

It can be noted in figure 2, that the power unit (1) of the invention is housed within a fire compartment (24) at a rear section (16) of the aircraft, that is, the power unit (1) can be installed at the same location that a conventional APU. Alternatively, the power unit (1) can be installed at another suitable location of the aircraft.

It should be noted that the architecture and design of the aircraft rear section no need to be modified significantly with respect to a usual APU installation. Components like: fire compartment, intake muffler, electric generators and so on, are substantially the same as conventional designs.

The power unit (1) is communicated with the bleed system (20) of the aircraft. A conduct (15) is provided communicating the aircraft cabin with the power unit (1), in particular for feeding cabin air to the heat engine.

The air-conditioning generations units (AGU's) (21) are usually installed at an unpressurized bay in the belly of the aircraft.

## Claims

1. An aircraft comprising a power unit (1) adapted for generating electric, pneumatic and/or hydraulic power for the aircraft, wherein the power unit (1) comprises:
a heat engine (14) having at least one drive shaft (2) and an exhaust pipe (7) for evacuating combustion gases out of the heat engine (14),
at least one load compressor (3) mechanically coupled with the drive shaft (2) to provide a flow of compressed air to the aircraft,
a Ram-air intake (4) in fluid communication with the load compressor (3) to feed Ram air to the load compressor (3),
a Rankine cycle system (12) for recovering thermal energy from the combustion gases and the compressed air provided by the load compressor (3) as mechanical energy for the assistance of the heat engine (14),
wherein the Rankine cycle system (12) comprises: an expander (22) mechanically coupled with the drive shaft (2), a first Ram-air intake (11) and a condenser (19) thermally coupled with the Ram-air intake (11) to cool down a Rankine system fluid, and a first heat exchanger (10a) thermally coupled with the output of the load compressor (3), and a second heat exchanger (10b) thermally coupled with the exhaust pipe (7), both heat exchangers (10a, 10b) for transferring heat to the Rankine system fluid.

2. Aircraft according to claim 1, wherein an aircraft cabin is communicated with the heat engine (14) for feeding cabin air to the heat engine (14), as a source of oxygen for the combustion.

3. Aircraft according to claim 1 or 2, wherein the power unit (1) further comprises at least one electric generator (9) driven by the drive shaft (2) for generating electric power.

4. Aircraft according to claim 3, wherein the power unit (1) further comprises at least one battery (25) connected with the electric generator (9) for storing the generated electric power, and wherein the battery (25) is connected to an electric system of the aircraft.

5. Aircraft according to any of the preceding claims, wherein the power unit (1) further comprises a gear box (17), and wherein the drive shaft (2) is mechanical coupled with the expander (22) and with the electric generator (9) through the gear box (17).

6. Aircraft according to any of the preceding claims, wherein the output of the load compressor (3) is fluidly communicated with a pneumatic system of the aircraft, to supply pressurized air to that system.

7. Aircraft according to claim 6, wherein the pneumatic system of the aircraft is an environmental control system (ECS) of the aircraft.

8. Aircraft according to claim 6, and wherein the output of the load compressor (3) is also fluidly communicated with the aircraft main engines to supply pressurized air for starting the main engines.

9. Aircraft according to any of the preceding claims, wherein the load compressor (3) is a twin load compressor including first and second load compressors (3a, 3b) both mechanically coupled with the drive shaft (2) to provide the flow of compressed air, and wherein flow regulating means (6) are provided at the outputs of the load compressors (3a, 3b), and wherein the outputs of the load compressors (3a, 3b) are fluidly communicated with an environmental control system (ECS) of the aircraft.

10. Aircraft according to claim 9, wherein the power unit (1) further comprises a control system adapted for controlling the operation of the first and second load compressors (3a, 3b), and wherein the control system is adapted to feed the flow of compressed air as bleed air to the environmental control system (ECS) of an aircraft both when the aircraft is on ground and in flight.

11. Aircraft according to claim 10, wherein the control system is adapted such that when the aircraft is parked, one load compressor is supplying air to the environmental control system (ECS) and the other compressor is not supplying air, and at least one electric generator is working, such as the majority of the bleed air and electric power required by the aircraft is provided by the power unit (1).

12. Aircraft according to claims 9 and 10-11, wherein the control system is additionally adapted such that when the aircraft is taxing, climbing or descending below a predefined height, the first and second load compressors (3a, 3b) are running as to provide bleed air at high pressure around a first predefined pressure.

13. Aircraft according to claim 9, wherein the flow regulating means additionally comprises inlet guide vanes for each load compressor (3a,3b), to regulate individually air flow through the compressors (3a,3b).

14. Aircraft according to any of the preceding claims, wherein the heat engine (14) is a gas-turbine engine, or a reciprocating engine.

## Patentansprüche

1. Flugzeug mit einer Leistungseinheit (1), die angepasst ist zum Erzeugen von elektrischer, pneumatischer und/oder hydraulischer Leistung für das Flugzeug, wobei die Leistungseinheit (1) Folgendes umfasst:
eine Wärmekraftmaschine (14) mit zumindest einer Antriebswelle (2) und einem Auslassrohr (7) zum Evakuieren von Verbrennungsgasen aus der Wärmekraftmaschine (14),
zumindest einen Lastkompressor (3), mechanisch gekoppelt mit der Antriebswelle (2) zum Bereitstellen eines Stroms von Druckluft zum Flugzeug,
einen Staulufteinlass (4) in Fluidverbindung mit dem Lastkompressor (3) zum Zuführen von Stauluft in den Lastkompressor (3),
ein System mit Rankine-Kreisprozess (12) zur Rückgewinnung von thermischer Energie aus den Verbrennungsgasen und der Druckluft, die durch den Lastkompressor (3) bereitgestellt wird, als mechanische Energie zur Unterstützung der Wärmekraftmaschine (14),
wobei das System mit Rankine-Kreisprozess (12) Folgendes umfasst: einen Expander (22), der mechanisch mit der Antriebswelle (2) gekoppelt ist, einen ersten Staulufteinlass (11) und einen Kondensator (19), der thermisch mit dem Staulufteinlass (11) gekoppelt ist, um das Fluid im Rankine-System herunterzukühlen, und einen ersten Wärmetauscher (10a), der thermisch mit dem Ausgang des Lastkompressors (3) gekoppelt ist, und einen zweiten Wärmetauscher (10b), der thermisch mit dem Auslassrohr (7) gekoppelt ist, wobei beide Wärmetauscher (10a, 10b) dazu dienen, Wärme auf das Fluid im Rankine-System zu übertragen.

2. Flugzeug nach Anspruch 1, wobei eine Flugzeugkabine mit der Wärmekraftmaschine (14) verbunden ist zum Zuführen von Kabinenluft zur Wärmekraftmaschine (14), als eine Quelle von Sauerstoff für die Verbrennung.

3. Flugzeug nach Anspruch 1 oder 2, wobei die Leistungseinheit (1) ferner zumindest einen elektrischen Generator (9) umfasst, der durch die Antriebswelle (2) angetrieben wird, um elektrische Leistung zu erzeugen.

4. Flugzeug nach Anspruch 3, wobei die Leistungseinheit (1) ferner zumindest eine Batterie (25), die mit dem elektrischen Generator (9) verbunden ist, zum Speichern der erzeugten elektrischen Leistung umfasst, und wobei die Batterie (25) mit einem elektrischen System des Flugzeugs verbunden ist.

5. Flugzeug nach einem der vorhergehenden Ansprüche, wobei die Leistungseinheit (1) ferner einen Getriebekasten (17) umfasst und wobei die Antriebswelle (2) über den Getriebekasten (17) mechanisch mit dem Expander (22) und mit dem elektrischen Generator (9) gekoppelt ist.

6. Flugzeug nach einem der vorhergehenden Ansprüche, wobei der Ausgang des Lastkompressors (3) fluidisch mit einem pneumatischen System des Flugzeugs verbunden ist, um diesem System Druckluft zuzuführen.

7. Flugzeug nach Anspruch 6, wobei das pneumatische System des Flugzeugs ein Umgebungssteuerungssystem (ECS) des Flugzeugs ist.

8. Flugzeug nach Anspruch 6, und wobei der Ausgang des Lastkompressors (3) auch fluidisch mit den Flugzeughaupttriebwerken verbunden ist, um Druckluft zum Starten der Haupttriebwerke zuzuführen.

9. Flugzeug nach einem der vorhergehenden Ansprüche, wobei der Lastkompressor (3) ein Doppellastkompressor ist, umfassend einen ersten und einen zweiten Lastkompressor (3a, 3b), die beide mechanisch mit der Antriebswelle (2) gekoppelt sind, um den Strom der Druckluft bereitzustellen, und wobei Stromregulierungsmittel (6) an den Ausgängen der Lastkompressoren (3a, 3b) bereitgestellt sind, und wobei die Ausgänge der Lastkompressoren (3a, 3b) fluidisch mit einem Umgebungssteuerungssystem (ECS) des Flugzeugs verbunden sind.

10. Flugzeug nach Anspruch 9, wobei die Leistungseinheit (1) ferner ein Steuerungssystem umfasst, das angepasst ist zum Steuern des Betriebs des ersten und des zweiten Lastkompressors (3a, 3b), und wobei das Steuerungssystem angepasst ist zum Zuführen des Stroms von Druckluft als Zapfluft zum Umgebungssteuerungssystem (ECS) eines Flugzeugs, sowohl, wenn das Flugzeug am Boden ist, als auch, wenn es im Flug ist.

11. Flugzeug nach Anspruch 10, wobei das Steuerungssystem so angepasst ist, dass, wenn das Flugzeug geparkt ist, ein Lastkompressor Luft zum Umgebungssteuerungssystem (ECS) zuführt und der andere Kompressor keine Luft zuführt, und wobei zumindest ein elektrischer Generator arbeitet, sodass der Großteil der Zapfluft und der elektrischen Leistung, die vom Flugzeug benötigt werden, durch die Leistungseinheit (1) bereitgestellt werden.

12. Flugzeug nach Ansprüchen 9 und 10-11, wobei das Steuerungssystem zusätzlich so angepasst, dass, wenn das Flugzeug anrollt, steigt oder unter eine vordefinierte Höhe sinkt, der erste und der zweite Lastkompressor (3a, 3b) laufen, um Zapfluft bei hohem Druck um einen ersten vordefinierten Druck bereitzustellen.

13. Flugzeug nach Anspruch 9, wobei das Stromregulierungsmittel zusätzlich Einlassleitschaufeln für jeden Lastkompressor (3a, 3b) umfasst, um den Luftstrom durch die Kompressoren (3a, 3b) einzeln zu regulieren.

14. Flugzeug nach einem der vorhergehenden Ansprüche, wobei die Wärmekraftmaschine (14) eine Gasturbinenkraftmaschine oder eine Hubkolbenkraftmaschine ist.

## Revendications

1. Aéronef, comprenant une unité de puissance (1) adaptée à générer une puissance électrique, pneumatique et/ou hydraulique pour l'aéronef, l'unité de puissance (1) comprenant :
un moteur thermique (14) pourvu d'au moins un arbre d'entraînement (2) et d'un tuyau d'échappement (7) destiné à évacuer des gaz de combustion du moteur thermique (14),
au moins un compresseur de charge (3) accouplé mécaniquement à l'arbre d'entraînement (2) pour fournir un flux d'air comprimé à l'aéronef,
une prise d'air dynamique (4) en communication fluidique avec le compresseur de charge (3) pour alimenter le compresseur de charge (3) en air dynamique,
un système à cycle de Rankine (12) destiné à récupérer de l'énergie thermique des gaz de combustion et de l'air comprimé fourni par le compresseur de charge (3) sous forme d'énergie mécanique pour assister le moteur thermique (14),
le système à cycle de Rankine (12) comprenant : un détendeur (22) accouplé mécaniquement à l'arbre d'entraînement (2), une première prise d'air dynamique (11) et un condenseur (19) accouplé thermiquement à la prise d'air dynamique (11) pour refroidir un fluide de système de Rankine, et un premier échangeur de chaleur (10a) accouplé thermiquement à la sortie du compresseur de charge (3) et un deuxième échangeur de chaleur (10b) accouplé thermiquement au tuyau d'échappement (7), les deux échangeurs de chaleur (10a, 10b) étant destinés à transférer de la chaleur au fluide de système de Rankine.

2. Aéronef selon la revendication 1, dans lequel une cabine d'aéronef est mise en communication avec le moteur thermique (14) pour alimenter le moteur thermique (14) en air de cabine servant de source d'oxygène pour la combustion.

3. Aéronef selon la revendication 1 ou 2, dans lequel l'unité de puissance (1) comprend en outre au moins un générateur électrique (9), entraîné par l'arbre d'entraînement (2), destiné à générer de la puissance électrique.

4. Aéronef selon la revendication 3, dans lequel l'unité de puissance (1) comprend en outre au moins une batterie (25), reliée au générateur électrique (9), destinée à stocker l'énergie électrique générée, et dans lequel la batterie (25) est reliée à un système électrique de l'aéronef.

5. Aéronef selon l'une quelconque des revendications précédentes, dans lequel l'unité de puissance (1) comprend en outre une boîte d'engrenages (17), et dans lequel l'arbre d'entraînement (2) est accouplé mécaniquement au détendeur (22) et au générateur électrique (9) par l'intermédiaire de la boîte d'engrenages (17).

6. Aéronef selon l'une quelconque des revendications précédentes, dans lequel la sortie du compresseur de charge (3) est mise en communication fluidique avec un système pneumatique de l'aéronef pour fournir de l'air sous pression à ce système.

7. Aéronef selon la revendication 6, dans lequel le système pneumatique de l'aéronef est un système de régulation d'ambiance (ECS) de l'aéronef.

8. Aéronef selon la revendication 6, et dans lequel la sortie du compresseur de charge (3) est également mise en communication fluidique avec les moteurs principaux de l'aéronef pour fournir de l'air sous pression destiné au démarrage des moteurs principaux.

9. Aéronef selon l'une quelconque des revendications précédentes, dans lequel le compresseur de charge (3) est un compresseur double charge comportant des premier et deuxième compresseurs de charge (3a, 3b) tous deux accouplés mécaniquement à l'arbre d'entraînement (2) pour fournir le flux d'air comprimé, et dans lequel des moyens régulateurs de débit (6) sont prévus aux sorties des compresseurs de charge (3a, 3b), et dans lequel les sorties des compresseurs de charge (3a, 3b) sont mises en communication fluidique avec un système de régulation d'ambiance (ECS) de l'aéronef.

10. Aéronef selon la revendication 9, dans lequel l'unité de puissance (1) comprend en outre un système de commande adapté à commander le fonctionnement des premier et deuxième compresseurs de charge (3a, 3b), et dans lequel le système de commande est adapté à alimenter le système de régulation d'ambiance (ECS) d'un aéronef par le flux d'air comprimé sous forme d'air de prélèvement, aussi bien lorsque l'aéronef est au sol que lorsqu'il est en vol.

11. Aéronef selon la revendication 10, dans lequel le système de commande est adapté de sorte que, lorsque l'aéronef est stationné, un compresseur de charge fournisse de l'air au système de régulation d'ambiance (ECS) et l'autre compresseur ne fournisse pas d'air et au moins un générateur électrique fonctionne, de manière à ce que la majorité de l'air de prélèvement et de la puissance électrique nécessaires l'aéronef soit fournie par l'unité de puissance (1).

12. Aéronef selon les revendications 9 et 10-11, dans lequel le système de commande est adapté en outre de sorte que, lorsque l'aéronef est en roulage, en montée ou en descente sous une hauteur prédéfinie, les premier et deuxième compresseurs de charge (3a, 3b) fonctionnent de manière à fournir de l'air de prélèvement à haute pression autour d'une première pression prédéfinie.

13. Aéronef selon la revendication 9, dans lequel les moyens régulateurs de débit comprennent en outre un aubage directeur d'entrée pour chaque compresseur de charge (3a, 3b) pour réguler individuellement le flux d'air traversant les compresseurs (3a, 3b).

14. Aéronef selon l'une quelconque des revendications précédentes, dans lequel le moteur thermique (14) est un moteur à turbine à gaz ou un moteur à mouvement alternatif.
